# EUROPEAN PATENT SPECIFICATION

(11) **EP 4 578 562 B1**
(45) Date of publication and mention of the grant of the patent: **13.05.2026**
(21) Application number: 24223327.8
(22) Date of filing: 26.12.2024
(51) Int. Cl.: B08B 9/057, B08B 9/032

(54) **AUTOMATIC CLEANING SYSTEM BASED ON CLEANING BALL**
AUTOMATISCHES REINIGUNGSSYSTEM AUF BASIS EINES REINIGUNGSBALLS
SYSTÈME DE NETTOYAGE AUTOMATIQUE BASÉ SUR UNE BALLE DE NETTOYAGE

(30) Priority: 28.12.2023 CN 202311851982
(43) Date of publication of application: 02.07.2025
(73) Proprietor: Guangdong Sophon Intelligent Technology Co., Ltd, Dongguan City, Guangdong 523000 (CN); Sophon Technology (Hungary) Co. Kft., 1054 Budapest (HU)
(72) Inventor: MA, Jielin, Dongguan, 523000 (CN); LI, Linbo, Dongguan, 523000 (CN); XU, Xiaoqing, Dongguan, 523000 (CN); LIAO, Junzhi, Dongguan, 523000 (CN)
(74) Representative: JD&P Patent Attorneys Joanna Dargiewicz & Partners

(56) References cited:
- CN-U- 207 012 917
- CN-U- 216 880 877
- CN-U- 219 965 865

## Description

### FIELD

The application relates to the technical field of new information technology, in particular to an automatic cleaning system based on a cleaning ball.

### BACKGROUND

Lithium battery slurry is delivered by pipes in the production process, and adhesive substances are often adhered to inner walls of the pipes. Particularly after production, lithium battery slurry left in the delivery pipes, if not removed timely, will be adhered to the inner walls of the pipes and caked, affecting to some extent normal transportation of lithium battery slurry in subsequent production, compromising the transportation efficiency of the lithium battery slurry, and in a severe case, leading to a failure to smoothly transport the lithium battery slurry due to blockage.

The related art, for example, Chinese Patent Publication No. CN219965865U discloses a cleaning device for cleaning electrode slurry delivery pipes in order to ensure normal transportation of electrode slurry and improve transportation efficiency. The cleaning device comprises a wall scraping portion, a pushing portion and a connecting portion fixedly connected between the wall scraping portion and the pushing portion. A body of the wall scraping portion, a body of the pushing portion and a body of the connecting portion are all columnar and arranged coaxially, such that the slurry delivery efficiency is improved, and the risk of slurry mixing can be avoided when different types of slurry are delivered. Document CN216880877U discloses an automatic cleaning system based on a cleaning ball, comprising a delivery pipe, connecting pipes, and a cleaning ball. The delivery pipe includes a delivery channel, a feed inlet, a discharge outlet, and two connecting ports, all of which are connected to the delivery channel. The feed inlet is configured to connect to the discharge end of a delivery pump. The system features two connecting pipes -designated as first and second- where the port connected to the first pipe is positioned near the feed inlet, and the port connected to the second pipe is positioned near the discharge outlet. Accordingly, CN216880877U discloses the preamble of claim 1.

However, a cleaning component in the cleaning device is not used for sealing between a cleaning chamber and a delivery pipe. When a pushball returns into a ball cage to be cleaned after cleaning away slurry in the pipe, cleaning liquid will flow from the cleaning chamber into the delivery pipe, so a large amount of cleaning liquid will be consumed when the pushball is cleaned. To solve the problem of serious waste of cleaning liquid caused by flowing of the cleaning liquid from the cleaning chamber into the delivery pipe, a valve is arranged between the cleaning chamber and the delivery pipe of an existing pushball system to isolate the cleaning chamber from the delivery pipe; and after the pushball is cleaned, the valve is opened to discharge the cleaning liquid from the delivery pipe.

To avoid the arrangement of a valve between the cleaning chamber and the delivery pipe, some existing pushball systems adopt a ball as a sealing structure, which needs to slide back and forth to pipes at two ends of the delivery pipe to realize sealing when the whole delivery pipe is cleaned, and in the case, the cleaning liquid is discharged into a slurry tank merely via a discharge outlet, leading to low cleaning efficiency.

### SUMMARY

The objective of the application is to overcome the defects in the prior art by providing an automatic cleaning system based on a cleaning ball, which is high in pipe cleaning efficiency and low in energy consumption.

The objective of the application is fulfilled by the following technical solution:

An automatic cleaning system based on a cleaning ball comprises a delivery pipe, connecting pipes and a cleaning ball, wherein a delivery channel, a feed inlet, a discharge outlet and two connecting ports are formed in the delivery pipe; the feed inlet, the discharge outlet and the two connecting ports are all connected to the delivery channel; the feed inlet is connected to a discharge end of a delivery pump; the number of the connecting pipes are two, and the two connecting pipes are respectively a first connecting pipe and a second connecting pipe; the connecting port connected to the first connecting pipe is arranged close to the feed inlet, and the connecting port connected to the second connecting pipe is arranged close to the discharge outlet; and first in-place sensors are arranged on an inner wall of the delivery channel between the feed inlet and the discharge outlet, and each connecting pipe is provided with a second in-place sensor.

Compared with the prior art, the application has at least the following advantages:
1. According to the automatic cleaning system based on a cleaning ball, the cleaning ball moves in the delivery channel and cleaning chambers of central pipes of two bypass pipe groups, and the first in-place sensors, the second in-place sensors, third in-place sensors and fourth in-place sensors work together for sensing, such that a controller, when receiving different signals, can control on-off control valves of cleaning liquid feed pipes, on-off control valves of compressed air source pipes and on-off control valves of sewage discharge pipes to act respectively to deliver slurry, or clean the cleaning ball, or clean both the delivery channel and the cleaning ball. In this way, automatic delivery of slurry, automatic cleaning of the cleaning ball, and automatic cleaning of both the delivery channel and the cleaning ball are realized, manual intervention is reduced, and the labor intensity is relieved.
2. When slurry needs to be delivered, the cleaning ball is pushed by a corresponding stop mechanism from a cleaning chamber to a position corresponding to the second in-place sensor of the first connecting pipe, at this moment, the second in-place sensor senses the cleaning ball, that is, the cleaning ball is sealed in the first connecting pipe, and the controller controls the delivery pump to work and at the same time, controls the on-off control valve of the compressed air source pipe to remain constant to hold the cleaning ball at the current position, such that the cleaning chamber is isolated from the delivery channel, the slurry will not be accumulated in the cleaning chamber close to the first connecting pipe; and the on-off control valve of the slurry discharge pipe is controlled to be opened, at this moment, the slurry flows into the delivery channel via the feed inlet and then passes through the delivery channel to flow out via the discharge outlet. Of course, according to actual requirements, slurry entering the delivery channel may flow out of the slurry discharge pipe via the cleaning chamber close to the second connecting pipe, such that the situation that the slurry enters the cleaning chamber and cannot flow or even is caked is avoided. Every time the delivery channel finishes slurry delivery, the cleaning ball is pushed by air to move into the cleaning chamber of the other central pipe through the first connecting pipe, the delivery channel and the second connecting pipe or to slide from the first connecting pipe through the delivery channel, the second connecting pipe and the delivery channel finally to the first connecting pipe again, such that reliable pipe cleaning is realized.
3. When only the cleaning ball needs to be cleaned, the compressed air source pipe of a second bypass pipe group works, the cleaning ball slides from the first connecting pipe into the corresponding cleaning chamber, at this moment, a power shaft of the stop mechanism on the central pipe of the first bypass pipe group stretches out by half of a maximum length, such that a major portion of the cleaning ball is exposed into the cleaning chamber and abuts against a power output end of the stop mechanism, and the remaining portion of the cleaning ball is located in the first connecting pipe to isolate the cleaning chamber from the delivery channel; at this moment, the on-off control valve of the cleaning liquid feed pipe of the first bypass pipe group is opened, the on-off control valve of the compressed air source pipe of the first bypass pipe group is closed, the on-off control valve of the slurry discharge pipe of the first bypass pipe group is closed, and the on-off control valve of the sewage discharge pipe of the first bypass pipe group is opened, such that the cleaning ball is cleaned, a waste of cleaning liquid caused by flowing of the cleaning liquid from the cleaning chamber into the delivery channel is avoided, and a valve for sealing and isolating the cleaning chamber and the delivery channel is not needed anymore.
4. When both the cleaning ball and the delivery channel need to be cleaned, the cleaning ball moves into the corresponding cleaning chamber under the action of air from the compressed air source pipe of the second bypass pipe group, at this moment, the power output end of the stop mechanism in the corresponding cleaning chamber has a minimum travel distance, the third in-place sensor and the fourth in-place sensor in the cleaning chamber of the first bypass pipe ground both sense the cleaning ball, the cleaning chamber of the first bypass pipe group is connected to the delivery channel by means of the first connecting pipe, the on-off control valve of the cleaning liquid feed pipe close to the feed inlet or the discharge outlet is opened, and the cleaning ball, the connecting pipes and the delivery channel are synchronously cleaned with cleaning liquid, such that quick cleaning without dead corners is realized, and the pipe cleaning efficiency is greatly improved.

### BRIEF DESCRIPTION OF THE DRAWINGS

To better clarify the technical solutions in the embodiments of the application, drawings used in the embodiments are briefly introduced below. It should be understood that the following drawings merely illustrate some embodiments of the application and thus should not be construed as limitations of the scope of the application. Those ordinarily skilled in the art can obtain other related drawings according to the following ones without creative labor.
FIG. 1 is a schematic diagram of an automatic cleaning system based on a cleaning ball according to one embodiment;
FIG. 2 is a partial enlarged view of the automatic cleaning system in FIG. 1;
FIG. 3 is a schematic diagram of the automatic cleaning system in FIG. 1 in a state where slurry is delivered;
FIG. 4 is a schematic diagram of the automatic cleaning system in FIG. 1 in a state where a cleaning ball is cleaned;
FIG. 5 is a schematic diagram of the automatic cleaning system in FIG. 1 in a state where the cleaning ball and a delivery channel are cleaned;
FIG. 6 is a sectional view of the automatic cleaning system shown in FIG. 1;
FIG. 7 is a sectional view of the cleaning ball of the automatic cleaning system shown in FIG. 1.

### DESCRIPTION OF THE EMBODIMENTS

The application provides an automatic cleaning system based on a cleaning ball, comprising a delivery pipe, connecting pipes and a cleaning ball. The delivery pipe is provided with a delivery channel, a feed inlet, a discharge outlet and two connecting ports. The feed inlet, the discharge outlet and the two connecting ports are all connected to the delivery channel. The feed inlet is connected to a discharge end of a delivery pump. The number of the connecting pipes are two, and the two connecting pipes are respectively a first connecting pipe and a second connecting pipe; the connecting port connected to the first connecting pipe is arranged close to the feed inlet, and the connecting port connected to the second connecting pipe is arranged close to the discharge outlet; first in-place sensors are arranged on an outer wall of the delivery channel between the feed inlet and the discharge outlet, and the connecting pipes are provided with second in-place sensors.

The automatic cleaning system further comprises two bypass pipe groups, two stop mechanisms and a controller, wherein the two bypass pipe groups are respectively a first bypass pipe group and a second bypass pipe group; the first bypass pipe group is connected to the first connecting pipe, and the second bypass group is connected to the second connecting pipe; each bypass pipe group comprises a central pipe, a cleaning liquid feed pipe, a compressed air source pipe, a slurry discharge pipe and a sewage discharge pipe, the central pipe is connected to the delivery pipe by means of the corresponding connecting pipe, a cleaning chamber and an air-liquid inlet connected to the cleaning chamber are formed in the central pipe, the cleaning chamber is connected to the cleaning liquid feed pipe and the compressed air source pipe by means of the air-liquid inlet, the cleaning chamber is also connected to the sewage discharge pipe and the slurry discharge pipe, the cleaning liquid feed pipe and the compressed air source pipe are both located above the central pipe, and the slurry discharge pipe and the sewage discharge pipe are both located below the central pipe. A third in-place sensor is arranged on a portion, close to the corresponding connecting pipe, of an outer wall of the cleaning chamber of the central pipe of each bypass pipe group, a fourth in-place sensor is arranged on a portion, away from the corresponding connecting pipe, of an outer wall of the cleaning chamber. A portion, connected to the air-liquid inlet, of the cleaning chamber is located between the third in-place sensor and the fourth in-place sensor. The two stop mechanisms are mounted on the corresponding central pipes, and each stop mechanism is used for pushing the cleaning ball from the cleaning chamber of the corresponding central pipe into the corresponding connecting pipe.

The controller is electrically connected to the first in-place sensors, the second in-place sensors, the third in-place sensors, the fourth in-place sensors, a control end of the delivery pump, on-off control valves of the cleaning liquid feed pipes, on-off control valves of the compressed air source pipes, on-off control valves of the slurry discharge pipes and on-off control valves of the sewage discharge pipes.

When slurry needs to be delivered, the cleaning ball is pushed by the corresponding stop mechanism from the cleaning chamber to a position corresponding to the second in-place sensor of the first connecting pipe, at this moment, the second in-place sensor senses the cleaning ball, that is, the cleaning ball is sealed in the first connecting pipe, and the controller controls the delivery pump to work and at the same time, controls the on-off control valve of the compressed air source pipe to remain constant to hold the cleaning ball at the current position, such that the cleaning chamber is isolated from the delivery channel. Thus, the slurry will not be accumulated in the cleaning chamber close to the first connecting pipe; and the on-off control valve of the slurry discharge pipe is controlled to be opened, at this moment, the slurry flows into the delivery channel via the feed inlet and then passes through the delivery channel to flow out via the discharge outlet. Of course, according to actual requirements, slurry entering the delivery channel may flow out of the slurry discharge pipe via the cleaning chamber close to the second connecting pipe, such that the situation that the slurry enters the cleaning chamber and cannot flow or even is caked is avoided. Every time the delivery channel finishes slurry delivery, the cleaning ball is pushed by air to move into the cleaning chamber of the other central pipe through the first connecting pipe, the delivery channel and the second connecting pipe or to slide from the first connecting pipe through the delivery channel, the second connecting pipe and the delivery channel finally to the first connecting pipe again, such that reliable pipe cleaning is realized.

When only the cleaning ball needs to be cleaned, the compressed air source pipe of the second bypass pipe group works, the cleaning ball is pushed by the airflow from the compressed air source pipe of the second bypass pipe group to slide from the first connecting pipe into the cleaning chamber of the first bypass pipe group, at this moment, a driving shaft of the stop mechanism on the central pipe of the first bypass pipe group extends out by half of a maximum length, such that a major portion of the cleaning ball is exposed into the cleaning chamber and abuts against a power output end of the driving shaft of the stop mechanism, and the remaining portion of the cleaning ball is located in the first connecting pipe to isolate the cleaning chamber from the delivery channel; at this moment, the on-off control valve of the cleaning liquid feed pipe of the first bypass pipe group is opened, the on-off control valve of the compressed air source pipe of the first bypass pipe group is closed, the on-off control valve of the slurry discharge pipe of the first bypass pipe group is closed, and the on-off control valve of the sewage discharge pipe of the first bypass pipe group is opened, such that the cleaning ball is cleaned, a waste of cleaning liquid caused by flowing of the cleaning liquid from the cleaning chamber into the delivery channel is avoided, and a valve for sealing and isolating the cleaning chamber and the delivery channel is not needed anymore.

When both the cleaning ball and the delivery channel need to be cleaned, the cleaning ball moves into the cleaning chamber of the first bypass pipe group under the action of air from the compressed air source pipe of the second bypass pipe group, at this moment, the power output end of the stop mechanism of the first bypass pipe group has a minimum travel distance, the third in-place sensor and the fourth in-place sensor in the cleaning chamber of the first bypass pipe ground both sense the cleaning ball, the cleaning chamber of the first bypass pipe group is connected to the delivery channel by means of the first connecting pipe, the on-off control valve of the cleaning liquid feed pipe close to the feed inlet or the discharge outlet is opened, and the cleaning ball, the connecting pipes and the delivery channel are synchronously cleaned with cleaning liquid, such that quick cleaning without dead corners is realized, and the pipe cleaning efficiency is greatly improved.

According to the automatic cleaning system based on a cleaning ball, the cleaning ball moves in the delivery channel and the cleaning chambers of the central pipes of the two bypass pipe groups, and the first in-place sensors, the second in-place sensors, the third in-place sensors and the fourth in-place sensors work together for sensing, such that the controller, when receiving different signals, can control the on-off control valves of the cleaning liquid feed pipes, the on-off control valves of the compressed air source pipes and the on-off control valves of the sewage discharge pipes to act respectively to deliver slurry, or clean the cleaning ball, or clean both the delivery channel and the cleaning ball. In this way, automatic delivery of slurry, automatic cleaning of the cleaning ball, and automatic cleaning of both the delivery channel and the cleaning ball are realized, manual intervention is reduced, and the labor intensity is relieved.

To gain a better understanding of the technical solutions and beneficial effects of the application, the application is described in further detail below in conjunction with specific embodiments.

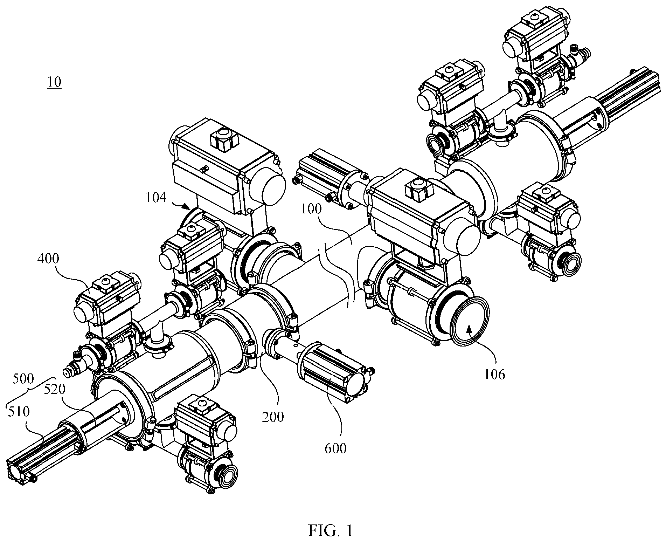

As shown in FIGS. 1-3, in one embodiment, an automatic cleaning system 10 based on a cleaning ball 300 comprises a delivery pipe 100, connecting pipes 200, a cleaning ball 300, a controller (not shown), two bypass pipe groups 400 and two stop mechanisms 500.

As shown in FIGS. 1-3, in one embodiment, the delivery pipe 100 is provided with a delivery channel 102, a feed inlet 104, a discharge outlet 106 and two connecting ports 108. The feed inlet 104, the discharge outlet 106 and the two connecting ports 108 are all in communication with the delivery channel 102. The feed inlet 104 is configured to be connected to a discharge end of a delivery pump; the number of the connecting pipes 200 are two, and the two connecting pipes 200 are respectively a first connecting pipe and a second connecting pipe; and the connecting port 108 connected to the first connecting pipe is arranged close to the feed inlet 104, and the connecting port 108 connected to the second connecting pipe is arranged close to the discharge outlet 106.

As shown in FIGS. 1-3, in one embodiment, the two bypass pipe groups 400 are respectively a first bypass pipe group and a second bypass pipe group; the first bypass pipe group is connected to the first connecting pipe, such that the first bypass pipe group is connected to the connecting port 108 close to the feed inlet 104 by means of the first connecting pipe; and the second bypass group is connected to the second connecting pipe, such that the second bypass pipe group is connected to the connecting port 108 close to the discharge outlet 106 by means of the second connecting pipe.

As shown in FIGS. 1-3, in one embodiment, first in-place sensors 103 are arranged on an outer wall of the delivery channel 102 between the feed inlet 104 and the discharge outlet 106, and the connecting pipes 200 are provided with second in-place sensors 203.

As shown in FIGS. 1-3, in one embodiment, each bypass pipe group 400 comprises a central pipe 410, a cleaning liquid feed pipe 420, a compressed air source pipe 430, a slurry discharge pipe 440 and a sewage discharge pipe 450. The central pipe 410 is connected to the delivery pipe 100 by means of the corresponding connecting pipe 200. The central pipe 410 is provided with a cleaning chamber 412 and an air-liquid inlet 414 connected to the cleaning chamber 412. The cleaning chamber 412 is connected to the cleaning liquid feed pipe 420 and the compressed air source pipe 430 by means of the air-liquid inlet 414, the cleaning chamber 412 is also connected to the sewage discharge pipe 450 and the slurry discharge pipe 440. The cleaning liquid feed pipe 420 and the compressed air source pipe 430 are both located above the central pipe 410, and the slurry discharge pipe 440 and the sewage discharge pipe 450 are both located below the central pipe 410. The two stop mechanisms 500 are mounted on the central pipes 410 of the corresponding bypass pipe groups 400 respectively, and each stop mechanism 500 is used for pushing the cleaning ball 300 from the cleaning chamber 412 of the corresponding central pipe 410 into the corresponding connecting pipe 200.

As shown in FIGS. 1-3, in one embodiment, a third in-place sensor 403 is arranged on a portion, close to the corresponding connecting pipe 200, of an outer wall of the cleaning chamber 412 of the central pipe 410 of each bypass pipe group 400, a fourth in-place sensor 405 is arranged on another portion, away from the corresponding connecting pipe 200, of the outer wall of the cleaning chamber 412, and a portion, connected to the air-liquid inlet 414, of the cleaning chamber 412 is located between the third in-place sensor 403 and the fourth in-place sensor 405.

In one embodiment, the controller is electrically connected to the first in-place sensors 103, the second in-place sensors 203, the third in-place sensors 403, the fourth in-place sensors 405, a control end of the delivery pump, on-off control valves of the cleaning liquid feed pipes 420, on-off control valves of the compressed air source pipes 430, on-off control valves of the slurry discharge pipes 440 and on-off control valves of the sewage discharge pipes 450.

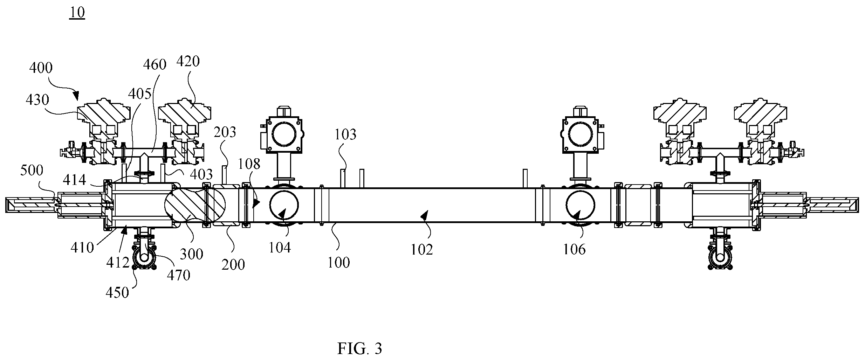

As shown in FIG. 3, in one embodiment, when slurry needs to be delivered, the cleaning ball 300 is pushed by the corresponding stop mechanism 500 from the cleaning chamber 412 to a position corresponding to the second in-place sensor 203 of the first connecting pipe, at this moment, the driving shaft of the stop mechanism 500 extends out by a maximum length, the second in-place sensor 203 senses the cleaning ball 300, that is, the cleaning ball 300 seals the first connecting pipe, and the controller controls the delivery pump to work and at the same time, the controller controls the on-off control valve of the compressed air source pipe 430 to remain constant to thereby maintain the cleaning ball 300 at the current position, such that the cleaning chamber 412 is isolated from the delivery channel 102 by the cleaning ball 300. Thus, the slurry will not be accumulated in the cleaning chamber 412 close to the first connecting pipe; and the on-off control valve of the slurry discharge pipe 440 is controlled to be opened, at this moment, the slurry flows into the delivery channel 102 via the feed inlet 104 and then passes through the delivery channel 102 to flow out via the discharge outlet 106. Of course, according to actual requirements, slurry entering the delivery channel 102 may flow out of the slurry discharge pipe 440 via the cleaning chamber 412 close to the second connecting pipe, such that the situation that the slurry enters the cleaning chamber 412 and cannot flow or even is caked is avoided. Every time the delivery channel 102 finishes slurry delivery, the cleaning ball 300 can be pushed by airflow to move through the first connecting pipe, the delivery channel 102 and the second connecting pipe and into the cleaning chamber 412 of the second bypass pipe group. Alternatively, every time the delivery channel 102 finishes slurry delivery, the cleaning ball 300 can be pushed to move from the first connecting pipe through the delivery channel 102, the second connecting pipe and back to the delivery channel 102 and finally return to the first connecting pipe again, such that reliable pipe cleaning is realized. It can be understood that the pipe cleaning frequency using the cleaning ball 300 may be set as needed. For example, every time the delivery channel 102 finishes slurry delivery, the cleaning ball 300 cleans the delivery channel 102 to prevent residual slurry from being caked in the delivery channel 102.

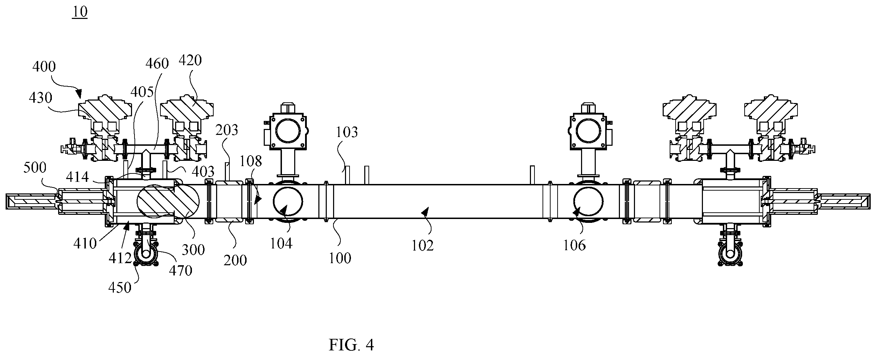

Also referring to FIG. 4, in one embodiment, when only the cleaning ball 300 needs to be cleaned, the compressed air source pipe 430 of the second bypass pipe group works, the cleaning ball 300 slides from the first connecting pipe into the corresponding cleaning chamber 412, at this moment, the driving shaft of the stop mechanism 500 on the central pipe 410 of the first bypass pipe group extends out by half of the maximum length, such that a major portion of the cleaning ball 300 is exposed in the cleaning chamber 412 and the cleaning ball 300 abuts against a power output end of the driving shaft of the stop mechanism 500, and the remaining portion of the cleaning ball 300 is located in the corresponding connecting pipe 200 to isolate the cleaning chamber 412 from the delivery channel 102; at this moment, the on-off control valve of the cleaning liquid feed pipe 420 of the first bypass pipe group is opened, the on-off control valve of the compressed air source pipe 430 of the first bypass pipe group is closed, the on-off control valve of the slurry discharge pipe 440 of the first bypass pipe group is closed, and the on-off control valve of the sewage discharge pipe 450 of the first bypass pipe group is opened, such that the major portion of the cleaning ball 300 exposed in the cleaning chamber 412 is cleaned, a waste of cleaning liquid caused by flowing of the cleaning liquid from the cleaning chamber 412 into the delivery channel 102 is avoided, and a valve for sealing and isolating the cleaning chamber 412 from the delivery channel 102 is not needed anymore. It can be understood that the cleaning frequency of the cleaning ball 300 may be set as needed. For example, the cleaning ball 300 is cleaned every time it finishes a round trip in the delivery channel 102. Alternatively, the cleaning ball 300 can be cleaned every time it finishes a single trip in the delivery channel 102. The cleaning ball 300 can be cleaned in the cleaning chamber 412 of the first bypass pipe group. Alternatively, the cleaning ball 300 can be cleaned in the cleaning chamber 412 of the second bypass pipe group.

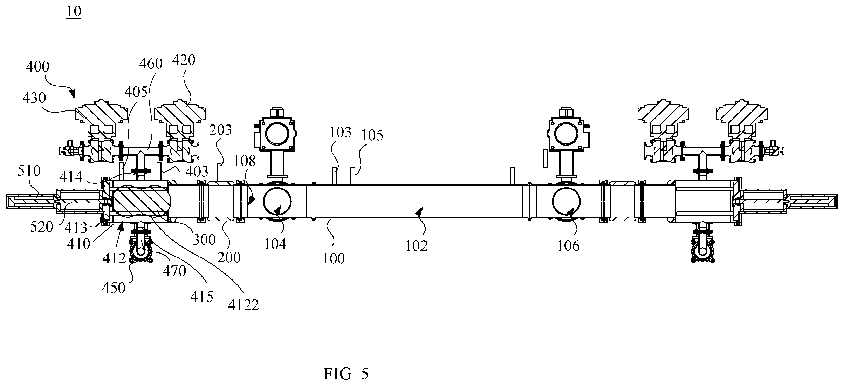

Referring to FIG. 5, in one embodiment, when both the cleaning ball 300 and the delivery channel 102 need to be cleaned, the cleaning ball 300 moves into the cleaning chamber 412 of the first bypass pipe group under the action of airflow from the compressed air source pipe 430 of the second bypass pipe group, at this moment, the power output end of the stop mechanism 500 in the corresponding cleaning chamber 412 has a minimum travel distance, the third in-place sensor 403 and the fourth in-place sensor 405 in the cleaning chamber 412 of the first bypass pipe group both sense the cleaning ball 300, the cleaning chamber 412 of the first bypass pipe group is connected to the delivery channel 102 by means of the corresponding connecting pipe 200, the on-off control valve of the cleaning liquid feed pipe 420 close to the feed inlet 104 is opened, such that the portion of the cleaning ball 300, which is received in the connecting pipe 200 as shown in FIG. 4, can be cleaned. Cleaning liquid can flow from the cleaning camber 412 to the delivery channel 102 via the connecting pipe 200, and the cleaning ball 300 can be driven to move from the cleaning camber 412 of the first bypass pipe group to the delivery channel 102 and slide in the delivery channel 102 to thereby clean the delivery channel 102. Thus, quick cleaning without dead corners is realized, and the pipe cleaning efficiency is greatly increased. In this embodiment, the on-off control valve of the cleaning liquid feed pipe 420 close to the feed inlet 104 is opened.

In the above automatic cleaning system 10 with the cleaning ball 300, the cleaning ball 300 moves in the delivery channel 102 and the cleaning chambers 412 of the central pipes 410 of the two bypass pipe groups 400, and the first in-place sensors 103, the second in-place sensors 203, the third in-place sensors 403 and the fourth in-place sensors 405 work together for sensing, such that the controller, when receiving different signals, can control the on-off control valves of the cleaning liquid feed pipes 420, the on-off control valves of the compressed air source pipes 430 and the on-off control valves of the sewage discharge pipes 450 to act correspondingly to thereby achieve switching among the three models: delivering slurry, cleaning the cleaning ball 300, or cleaning both the delivery channel 102 and the cleaning ball 300. In this way, automatic delivery of slurry, automatic cleaning of the cleaning ball 300, and automatic cleaning of both the delivery channel 102 and the cleaning ball 300 are realized, manual intervention is reduced, and the labor intensity is relieved.

In a case where a cleaning liquid inlet bypass pipe is added to a feed inlet 104 of a delivery pipe of a traditional cleaning system, matching in size between the feed inlet 104 and the cleaning liquid inlet bypass pipe should be taken into account; one pipe is used for feeding both water and slurry, and the slurry is stored in a tank and pumped into the delivery pipe by a pump. When the pipe is cleaned, cleaning liquid is first fed into the tank and then pumped into the delivery pipe by the pump, and the extra time spent in feeding cleaning liquid to the tank leads to low cleaning efficiency, particularly in a case where the pipeline has a large size. In view of this, the cleaning liquid feed pipes 420 are arranged on the two bypass pipe groups 400 of the automatic cleaning system 10 based on the cleaning ball 300 provided by the application and work together with the controller, the first in-place sensors 103, the second in-place sensors 203, the third in-place sensors 403 and the fourth in-place sensors 405, thus improving the cleaning efficiency of the pipeline and making it possible to reduce water consumption.

It should be noted that, in one embodiment, the first connecting pipe and the second connecting pipe are symmetrically arranged at two ends of the delivery pipe 100, and the first bypass pipe group and the second bypass pipe group are symmetrically arranged at the two ends of the delivery pipe 100. Each connecting pipe 200 is provided with a second in-place sensor 203, and the central pipe 410 of each bypass pipe group 400 is provided with a third in-place sensor 403 and a fourth in-place sensor 405.

Further, the automatic cleaning system 10 based on the cleaning ball 300 realizes synchronous cleaning of the cleaning ball 300 and the delivery pipe, that is, the automatic cleaning system 10 based on the cleaning ball 300 is a cleaning in place (CIP) system.

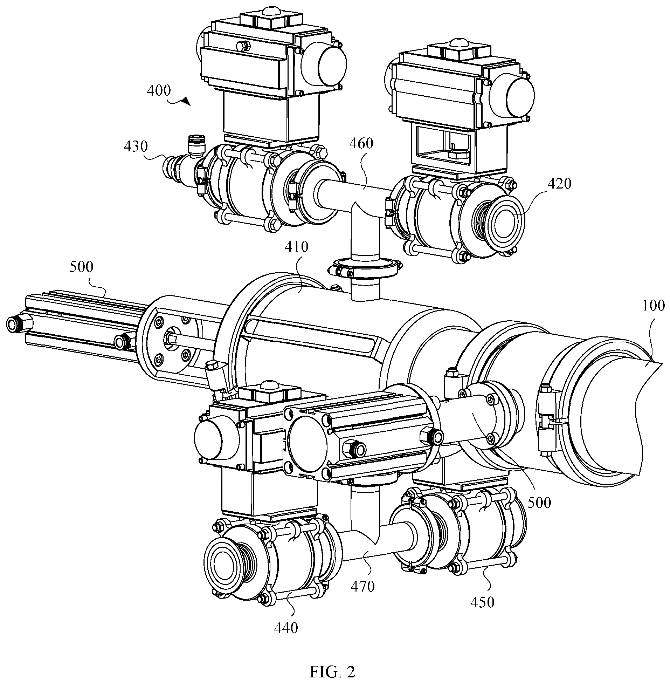

As shown in FIG. 2, in one embodiment, each bypass pipe group 400 further comprises an upper tee 460, wherein the cleaning chamber 412 is connected to a first end of the upper tee 460 by means of the air-liquid inlet 414, a second end of the upper tee 460 is connected to the cleaning liquid feed pipe 420, and a third end of the upper tee 460 is connected to the compressed air source pipe 430, such that the cleaning chamber 412 is in fluid communication with the compressed air source pipe 430 and the cleaning liquid feed pipe 420 by means of the air-liquid inlet 414 and the upper tee 460. Specifically, the air-liquid inlet 414, the compressed air source pipe 430 and the cleaning liquid feed pipe 420 are connected to the ends of the upper tee 460 by means of locking and sealing elements respectively.

As shown in FIG. 5, in one embodiment, each bypass pipe group 400 further comprises a lower tee 470, wherein the central pipe 410 is further provided with an air-liquid outlet 415, the cleaning chamber 412 is connected to a first end of the lower tee 470 by means of the air-liquid outlet 415, a second end of the lower tee 470 is connected to the slurry discharge pipe 440, and a third end of the lower tee 470 is connected to the sewage discharge pipe 450, such that the cleaning chamber 412 is in fluid communication with the slurry discharge pipe 440 and the sewage discharge pipe 450 by means of the air-liquid outlet 415 and the lower tee 470. Specifically, the cleaning chamber 412 with the air-liquid outlet 415, the slurry discharge pipe 440 and the sewage discharge pipe 450 are connected to the ends of the lower tee 470 by means of locking and sealing elements respectively.

In one embodiment, an air pressure control valve is arranged at the discharge outlet 106, and the controller is electrically connected to a control end of the air pressure control valve to control the discharge outlet 106 to be opened or closed as needed. For example, after the cleaning ball 300 is pushed out from the cleaning chamber 412 of the first bypass pipe group by the airflow from the compressed air source pipe 430 and/or the stop pushrod 520 of the first bypass pipe group, the cleaning ball 300 can be further pushed to move in the delivery channel 102 by the airflow from the compressed air source pipe 430. When the cleaning ball 300 passes through the discharge outlet 106, the compressed air source pipe 430 of the first bypass pipe group is closed and the air pressure control valve and the on-off control valve of the slurry discharge pipe 440 of the second bypass pipe group are opened such that the air pressure for pushing the cleaning ball 300 moving in the delivery channel 102 is released via the discharge outlet 106 which results in the cleaning ball 300 slowing down and stopping in front of the cleaning chamber 412 of the second bypass pipe. Then, the compressed air source pipe 430 of the first bypass pipe group is opened again and the airflow coming from the compressed air source pipe 430 of the first bypass pipe group pushes the cleaning ball 300 to enter into the cleaning chamber 412 of the second bypass pipe group. In this way, the cleaning ball 300 can be pushed into the cleaning chamber 412 of the second bypass pipe group with a relatively small speed/kinetic energy, a violent collision of the cleaning ball 300 with other components in the cleaning chamber 412 is avoided and collision damage of the cleaning ball 300 is avoided.

As shown in FIG. 5, in one embodiment, a pressure sensor 105 is arranged on the inner wall of the delivery channel 102 between the feed inlet 104 and the discharge outlet 106 and used for detecting the pressure in the delivery channel 102, and the controller is electrically connected to the pressure sensor 105. When the pressure sensor 105 detects that the pressure in the delivery channel 102 is lower than a preset pressure, the air pressure control valve is closed; otherwise, the air pressure control valve is opened, which facilitates to prevent collision damage of the cleaning ball 300. It should be noted that the preset pressure may be calculated according to the sliding speed or other parameters of the cleaning ball 300 at the feed inlet 104 or the discharge outlet 106, and then, the speed and the displacement value of the cleaning ball 300 sliding into the cleaning chamber 412 under the condition that the on-off control valve of the slurry discharge pipe 440 of the second bypass pipe group is opened, are calculated.

As shown in FIGS. 1 and 5, in one embodiment, each stop mechanism 500 comprises a stop cylinder 510 and a stop pushrod 520. The central pipe 410 of each bypass pipe group 400 is provided with a mounting hole 413 in fluid communication with the cleaning chamber 412, the stop cylinder 510 of each stop mechanism 500 is mounted in the mounting hole 413 of the central pipe 410 of the corresponding bypass pipe group 400, and the stop pushrod 520 is connected to the driving shaft of the stop cylinder 510 of the corresponding stop mechanism 500, such that the stop cylinder 510 can drive the stop pushrod 520 to move. In this embodiment, the stop cylinder 510 of each stop mechanism 500 is provided with a first travel sensor and a second travel sensor, and the first travel sensor and the second travel sensor are both electrically connected to the controller. For example, when the travel distance of the stop pushrod 520 driven by the stop cylinder 510 is equal to zero, that is, the power output end of the stop mechanism 500 has a minimum travel distance, the first travel sensor is triggered and generates a signal; and when the stop cylinder 510 drives the stop pushrod 520 to move by half of a maximum distance, that is, the driving shaft of the stop mechanism 500 on the central pipe 410 of the first bypass pipe group extends out by half of the maximum length, the second travel sensor is triggered and generates a signal.

As shown in FIGS. 1 and 5, in one embodiment, a ball cage 4122 is arranged in the cleaning chamber 412, an opening of the ball cage 4122 is in fluid communication with the corresponding connecting pipe 200, and an inner wall of the ball cage 4122 is in interference fit with the cleaning ball 300 when the cleaning ball 300 slides into the ball cage 4122, such that the cleaning ball 300 can be decelerated when sliding into the ball cage 4122. When the cleaning ball 300 moves in the delivery channel 102 and passes through the discharge outlet 106, the air pressure control valve and the on-off control valve of the slurry discharge pipe 440 of the second bypass pipe group are opened, and the pressure for pushing the ball to move in the delivery channel 102 is completely released via the discharge outlet 106, such that the cleaning ball 300 stops in front of the cleaning chamber 412 of the central pipe 410 of the second bypass pipe group. In this way, a collision of the ball is avoided. The cleaning ball 300 moves into the cleaning chamber 412 by a short distance under inertia, and the cleaning ball 300 is decelerated when sliding into the ball cage 4122, which facilitates to better avoid the issue of cleaning ball 300 being damaged due to collisions. For another example, when the cleaning ball 300 slides in the delivery channel 102, the air pressure control valve and the on-off control valve of the slurry discharge pipe 440 of the second bypass pipe group are opened; and when the cleaning ball 300 moves close to the discharge outlet 106, the air pressure control valve is closed, the cleaning ball 300 directly rushes into the cleaning chamber 412 without being stopped and started again, and the cleaning ball 300 is decelerated when sliding into the ball cage 4122, which facilitates to better avoid the issue of cleaning ball 300 being damaged due to collisions.

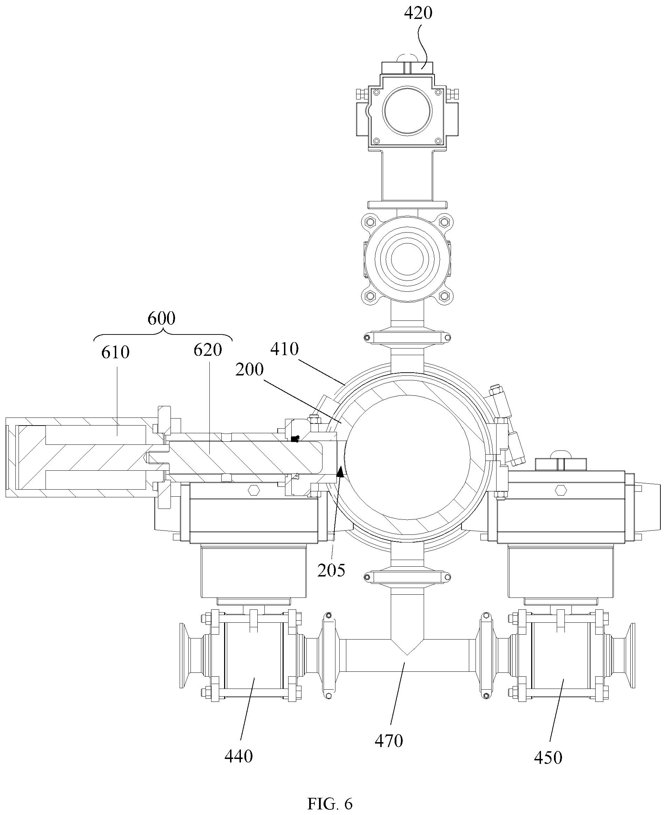

As shown in FIGS. 1 and 6, in one embodiment, the automatic cleaning system 10 based on the cleaning ball 300 further comprises two lock mechanisms 600. Each lock mechanism 600 comprises a lock cylinder 610 and a blocking rod 620, the lock cylinder 610 of each lock mechanism 600 is mounted on a peripheral wall of the corresponding connecting pipe 200, a drive shaft of the lock cylinder 610 of each lock mechanism 600 is connected to the corresponding blocking rod 620, a control end of the lock cylinder 610 of each lock mechanism 600 is in communication connection with the corresponding second in-place sensor 203. A limit hole 205 is formed in the peripheral wall of each connecting pipe 200, and when the corresponding second in-place sensor 202 sends out a sensing signal, the lock cylinder 610 of each lock mechanism 600 drives the corresponding blocking rod 620 to slide along the corresponding limit hole 205 into the corresponding connecting pipe 200 to abut against a recessed portion of the cleaning ball 300. When the cleaning ball 300 stays in the connecting pipe 200 adjacent to the feed inlet 104, that is, when the cleaning ball 300 stays in the first connecting pipe, the cleaning ball 300 is sealed in the first connecting pipe, materials are delivered in the delivery channel 102, and the cleaning ball 300 is reliably retained in the first connecting pipe. In this embodiment, the limit hole 205 is a step hole.

As shown in FIGS. 1 and 5, in one embodiment, a sliding distance of the cleaning ball 300 in the ball cage 4122 is greater than the maximum length of the cleaning ball 300, that is, the cleaning chamber 412 is lengthened, such that the cleaning ball 300 can be better buffered when sliding into to the ball cage 4122, which facilitates to better avoid the issue of cleaning ball 300 being damaged due to collisions. By lengthening the cleaning chamber 412, whether the cleaning chamber 412 and the delivery channel 102 are sealingly isolated by the cleaning ball 300 is controlled by the control program of the controller. When the cleaning chamber 412 and the delivery channel 102 need to be isolated by the cleaning ball 300, the cleaning ball 300 is pushed into the first connecting pipe by the stop cylinder 510, and then the compressed air source pipe 430 connected to the cleaning chamber 412 is opened to maintain an air pressure in the cleaning chamber 412, such that the cleaning ball 300 will be clamped in the pipe between the cleaning chamber 412 and the blocking rod 620 to fulfill a sealing effect. When slurry is delivered, the cleaning chamber 412 can be isolated from the delivery channel 102 to prevent the slurry from being accumulated in the cleaning chamber 412 at the end close to the feed inlet 104. When the interior of equipment needs to be cleaned, water is fed and discharged by means of bypass pipes on the cleaning chambers 412. Since the cleaning chambers 412 are not affected by other devices used for delivering slurry, the bypass pipes can be easily arranged on the cleaning chambers 412 by means of quick tees.

In one embodiment, the on-off control valves of the cleaning liquid feed pipes 420, the on-off control valves of the compressed air source pipes 430, the on-off control valves of the slurry discharge pipes 440 and the on-off control valves of the sewage discharge pipes 450 are all air valves.

In one embodiment, the controller is a microprogrammed control unit or an industrial computer. Compared with the prior art, the automatic cleaning system 10 based on the cleaning ball 300 can realize comprehensive cleaning of equipment without prolonging the cleaning time, adding round trips of the cleaning ball and leading to a waste of cleaning liquid; and compared with a pushball system that realize comprehensive cleaning like a CIP system, but cannot prevent ball collisions on the market, the automatic cleaning system 10 provided by the application can prevent ball collisions and will not increase energy consumption and working complexity in cleaning.

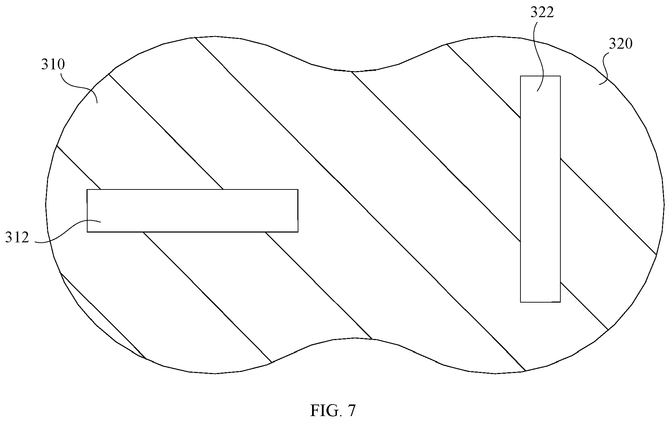

As shown in FIGS. 3 and 7, in one embodiment, the cleaning ball 300 comprises a first ball body 310 and a second ball body 320 which are connected, wherein an annular groove 302 is formed in a joint between the first ball body 310 and the second ball body 320. An end, away from the second ball body 320, of the first ball body 310 is embedded with a first magnetic strip 312, an end, away from the first ball body 310, of the second ball body 320 is embedded with a second magnetic strip 322, an included angle is formed between an extension direction of the first magnetic strip 312 and an extension direction of the second magnetic strip 322, such that an improved magnetic field can be generated on the surface of the cleaning ball 300, and an improved detection effect in the cleaning chamber 412 can be realized by the cleaning ball 300. In this embodiment, the included angle is equal to 90°.

The above embodiments merely illustrate several implementations of the invention and are specifically described in detail, but these embodiments should not be construed as limitations of the patent scope of the invention. The scope of protection of the application is defined by the claims.

## Claims

1. An automatic cleaning system (10) based on a cleaning ball (300), comprising a delivery pipe (100), connecting pipes (200) and a cleaning ball (300), the delivery pipe (100) being formed with a delivery channel (102), a feed inlet (104), a discharge outlet (106) and two connecting ports (108), the feed inlet (104), the discharge outlet (106) and the two connecting ports (108) being connected to the delivery channel (102), and the feed inlet (104) being configured to be connected to a discharge end of a delivery pump; the number of the connecting pipes (108) being two, and the two connecting pipes being respectively a first connecting pipe and a second connecting pipe; the connecting port (108) connected to the first connecting pipe being arranged close to the feed inlet (104), and the connecting port (108) connected to the second connecting pipe being arranged close to the discharge outlet (106), **characterized in that** a first in-place sensor is arranged on an outer wall of the delivery channel between the feed inlet (104) and the discharge outlet (106), and the connecting pipes (108) are provided with second in-place sensors (203);
wherein the automatic cleaning system (10) further comprises two bypass pipe groups (400), the two bypass pipe groups are respectively a first bypass pipe group and a second bypass pipe group; the first bypass pipe group is connected to the first connecting pipe, and the second bypass group is connected to the second connecting pipe; each said bypass pipe group (400) comprises a central pipe (410), a cleaning liquid feed pipe (420), a compressed air source pipe (430), a slurry discharge pipe (440) and a sewage discharge pipe (450); the central pipe (410) is connected to the delivery pipe by means of a corresponding one of the connecting pipes (108); the central pipe (410) is formed with a cleaning chamber and an air-liquid inlet connected to the cleaning chamber, the cleaning chamber is connected to the cleaning liquid feed pipe (420) and the compressed air source pipe (430) by means of the air-liquid inlet, the cleaning chamber is also connected to the sewage discharge pipe and the slurry discharge pipe (440), the cleaning liquid feed pipe (420) and the compressed air source pipe (430) are both located above the central pipe (410), and the slurry discharge pipe (440) and the sewage discharge pipe (450) are both located below the central pipe (410);
a third in-place sensor (403)is arranged on an outer wall, close to the corresponding connecting pipe, of the cleaning chamber of the central pipe (410) of each said bypass pipe group, a fourth in-place sensor (405) is arranged on the outer wall, away from the corresponding connecting pipe, of the cleaning chamber, and a portion, connected to the air-liquid inlet, of the cleaning chamber is located between the third in-place sensor (403)and the fourth in-place sensor (405);
the automatic cleaning system (10) further comprises two stop mechanisms (500) which are respectively mounted on the corresponding central pipes (410), and each said stop mechanism (500) is used for pushing the cleaning ball (300) from the cleaning chamber of the corresponding central pipe into the corresponding connecting pipe;
the automatic cleaning system further comprises a controller which is electrically connected to the first in-place sensors, the second in-place sensors (203), the third in-place sensor (404), the fourth in-place sensor (405), a control end of the delivery pump, on-off control valves of the cleaning liquid feed pipes (420), on-off control valves of the compressed air source pipes (430), on-off control valves of the slurry discharge pipes (440) and on-off control valves of the sewage discharge pipes (450).

2. The automatic cleaning system based on a cleaning ball according to Claim 1, **characterized in that** each said bypass pipe group further comprises an upper tee, the cleaning chamber is connected to a first end of the upper tee by means of the air-liquid inlet, a second end of the upper tee is connected to the cleaning liquid feed pipe (420), and a third end of the upper tee is connected to the compressed air source pipe (430).

3. The automatic cleaning system based on a cleaning ball according to Claim 1, **characterized in that** each said bypass pipe group further comprises a lower tee, the central pipe is further formed with an air-liquid outlet, the cleaning chamber is connected to a first end of the lower tee by means of the air-liquid outlet, a second end of the lower tee is connected to the slurry discharge pipe (440), and a third end of the lower tee is connected to the sewage discharge pipe.

4. The automatic cleaning system based on a cleaning ball according to Claim 1, **characterized in that** an air pressure control valve is arranged at the discharge outlet (106), and the controller is electrically connected to a control end of the air pressure control valve.

5. The automatic cleaning system based on a cleaning ball according to Claim 4, **characterized in that** a pressure sensor is arranged on the inner wall between the feed inlet (104) and the discharge outlet (106) and configured for detecting a pressure in the delivery channel, and the controller is electrically connected to the pressure sensor;
when the pressure sensor detects that the pressure in the delivery channel is lower than a preset pressure, the air pressure control valve is closed; otherwise, the air pressure control valve is opened.

6. The automatic cleaning system based on a cleaning ball according to Claim 1, **characterized in that** each said stop mechanism (500) comprises a stop cylinder (510) and a stop pushrod (520), the central pipe (410) of each said bypass pipe group is provided with a mounting hole (413) connected to the cleaning chamber (412), the stop cylinder (510) of each said stop mechanism (500) is mounted in the mounting hole (413) of the central pipe (410) of the corresponding bypass pipe group, and the stop pushrod (520) is connected to a power output shaft of the stop cylinder (510) of the corresponding stop mechanism (500).

7. The automatic cleaning system based on a cleaning ball according to Claim 1, **characterized in that** a ball cage (4122) is arranged in the cleaning chamber (412), an opening of the ball cage (4122) is in communication with the corresponding connecting pipe (200), and an inner wall of the ball cage (4122) is in interference fit with the cleaning ball (300) when the cleaning ball (300) slides into the ball cage (4122).

8. The automatic cleaning system based on a cleaning ball according to Claim 7, **characterized in that** a sliding distance of the cleaning ball (300) in the ball cage (4122) is greater than a maximum length of the cleaning ball (300).

9. The automatic cleaning system based on a cleaning ball according to Claim 1, **characterized in that** the on-off control valves of the cleaning liquid feed pipes (420), the on-off control valves of the compressed air source pipes (430), the on-off control valves of the slurry discharge pipes (440) and the on-off control valves of the sewage discharge pipes (450) are all air valves.

10. The automatic cleaning system based on a cleaning ball according to Claim 1, **characterized in that** the automatic cleaning system further comprises two lock mechanisms, each said lock mechanism comprises a lock cylinder and a blocking rod, the lock cylinder of each said lock mechanism is mounted on a peripheral wall of the corresponding connecting pipe, a drive shaft of the lock cylinder of each said lock mechanism is connected to the corresponding blocking rod, a control end of the lock cylinder of each said lock mechanism is in communication connection with the corresponding second in-place sensor, a limit hole is formed in the peripheral wall of each said connecting pipe, and the lock cylinder of each said lock mechanism is configured to drive the corresponding blocking rod to slide along the corresponding limit hole into the corresponding connecting pipe to abut against a recessed portion of the cleaning ball when the corresponding second in-place sensor sends out a sensing signal.

11. The automatic cleaning system based on a cleaning ball according to Claim 1, **characterized in that** the controller is a microprogrammed control unit or an industrial computer.

12. The automatic cleaning system based on a cleaning ball according to any one of Claims 1 to 11, **characterized in that** the cleaning ball (300) comprises a first ball body and a second ball body which are connected;
an annular groove is formed in a joint between the first ball body and the second ball body;
an end, away from the second ball body, of the first ball body is embedded with a first magnetic strip;
an end, away from the first ball body, of the second ball body is embedded with a second magnetic strip; and
an included angle is formed between an extension direction of the first magnetic strip and an extension direction of the second magnetic strip.

13. The automatic cleaning system based on a cleaning ball according to Claim 12, **characterized in that** the included angle is equal to 90°

## Patentansprüche

1. Automatisches Reinigungssystem (10) auf Grundlage einer Reinigungskugel (300), umfassend ein Zuführrohr (100), Verbindungsrohre (200) und eine Reinigungskugel (300), wobei das Zuführrohr (100) mit einem Zuführkanal (102), einem Speiseeinlass (104), einem Abgabeauslass (106) und zwei Verbindungsanschlüssen (108) ausgebildet ist, wobei der Speiseeinlass (104), der Abgabeauslass (106) und die zwei Verbindungsanschlüssen (108) mit dem Zuführkanal (102) verbunden sind und der Speiseeinlass (104) dazu ausgestaltet ist, mit einem Abgabeende einer Förderpumpe verbunden zu sein; wobei die Anzahl der Verbindungsrohre (108) zwei beträgt und die zwei Verbindungsrohre jeweils ein erstes Verbindungsrohr und ein zweites Verbindungsrohr sind; wobei der Verbindungsanschluss (108), der mit dem ersten Verbindungsrohr verbunden ist, nah am Speiseeinlass (104) angeordnet ist, und der Verbindungsanschluss (108), der mit dem zweiten Verbindungsrohr verbunden ist, nah am Abgabeauslass (106) angeordnet ist, **dadurch gekennzeichnet, dass** ein erster Positionssensor an einer Außenwand des Zuführkanals zwischen dem Speiseeinlass (104) und dem Abgabeauslass (106) angeordnet ist und die Verbindungsrohre (108) mit zweiten Positionssensoren (203) versehen sind;
wobei das automatische Reinigungssystem (10) ferner zwei Umgehungsrohrgruppen (400) umfasst, wobei die zwei Umgehungsrohrgruppen jeweils eine erste Umgehungsrohrgruppe und eine zweite Umgehungsrohrgruppe sind; wobei die erste Umgehungsrohrgruppe mit dem ersten Verbindungsrohr verbunden ist und die zweite Umgehungsrohrgruppe mit dem zweiten Verbindungsrohr verbunden ist; wobei jede Umgehungsrohrgruppe (400) ein Zentralrohr (410), ein Reinigungsflüssigkeitsspeiserohr (420), ein Druckluftquellenrohr (430), ein Aufschlämmungsabgaberohr (440) und ein Schmutzwasserabgaberohr (450) umfasst; wobei das Zentralrohr (410) durch ein entsprechendes Verbindungsrohr (108) mit dem Zuführrohr verbunden ist; wobei in dem Zentralrohr (410) eine Reinigungskammer gebildet ist und ein Luft-Flüssigkeit-Einlass mit der Reinigungskammer verbunden ist, wobei die Reinigungskammer durch den Luft-Flüssigkeit-Einlass mit dem Reinigungsflüssigkeitsspeiserohr (420) und dem Druckluftquellenrohr (430) verbunden ist, die Reinigungskammer außerdem mit dem Schmutzwasserabgaberohr und dem Aufschlämmungsabgaberohr (440) verbunden ist, das Reinigungsflüssigkeitsspeiserohr (420) und das Druckluftquellenrohr (430) beide oberhalb des Zentralrohrs (410) liegen und das Aufschlämmungsabgaberohr (440) und das Schmutzwasserabgaberohr (450) beide unterhalb des Zentralrohrs (410) liegen;
wobei ein dritter Positionssensor (403) an einer nah am entsprechenden Verbindungsrohr gelegenen Außenwand der Reinigungskammer des Zentralrohrs (410) jeder Umgehungsrohrgruppe angeordnet ist, ein vierter Positionssensor (405) an einer vom entsprechenden Verbindungsrohr entfernten Außenwand der Reinigungskammer angeordnet ist und ein mit dem Luft-Flüssigkeit-Einlass verbundener Abschnitt der Reinigungskammer zwischen dem dritten Positionssensor (403) und dem vierten Positionssensor (405) angeordnet ist;
wobei das automatische Reinigungssystem (10) ferner zwei Anschlagmechanismen (500) umfasst, die jeweils an dem entsprechenden Zentralrohr (410) angebracht sind, und jeder Anschlagmechanismus (500) zum Schieben der Reinigungskugel (300) aus der Reinigungskammer des entsprechenden Zentralrohr in das entsprechende Verbindungsrohr dient;
wobei das automatische Reinigungssystem ferner eine Steuereinrichtung umfasst, die mit den ersten Positionssensoren, den zweiten Positionssensoren (203), dem dritten Positionssensor (404), dem vierten Positionssensor (405), einem Steuerungsende der Förderpumpe, Ein-aus-Steuerventilen der Reinigungsflüssigkeitsspeiserohre (420), Ein-aus-Steuerventilen der Druckluftquellenrohre (430), Ein-aus-Steuerventilen der Aufschlämmungsabgaberohre (440) und Ein-aus-Steuerventilen der Schmutzwasserabgaberohre (450) elektrisch verbunden ist.

2. Automatisches Reinigungssystem auf Grundlage einer Reinigungskugel nach Anspruch 1, **dadurch gekennzeichnet, dass** jede Umgehungsrohrgruppe ferner ein oberes T-Stück umfasst, wobei die Reinigungskammer durch den Luft-Flüssigkeit-Einlass mit einem ersten Ende des oberen T-Stück verbunden ist, ein zweites Ende des oberen T-Stücks mit dem Reinigungsflüssigkeitsspeiserohr (420) verbunden ist und ein drittes Ende des oberen T-Stücks mit dem Druckluftquellenrohr (430) verbunden ist.

3. Automatisches Reinigungssystem auf Grundlage einer Reinigungskugel nach Anspruch 1, **dadurch gekennzeichnet, dass** jede Umgehungsrohrgruppe ferner ein unteres T-Stück umfasst, in dem Zentralrohr ferner ein Luft-Flüssigkeit-Auslass gebildet ist, die Reinigungskammer durch den Luft-Flüssigkeit-Auslass mit einem erste Ende des unteren T-Stücks verbunden ist, ein zweites Ende des unteren T-Stücks mit dem Aufschlämmungsabgaberohr (440) verbunden ist und ein drittes Ende des unteren T-Stücks mit dem Schmutzwasserabgaberohr verbunden ist.

4. Automatisches Reinigungssystem auf Grundlage einer Reinigungskugel nach Anspruch 1, **dadurch gekennzeichnet, dass** ein Luftdrucksteuerventil am Abgabeauslass (106) angeordnet ist und die Steuereinrichtung mit einem Steuerungsende des Luftdrucksteuerventils elektrisch verbunden ist.

5. Automatisches Reinigungssystem auf Grundlage einer Reinigungskugel nach Anspruch 4, **dadurch gekennzeichnet, dass** ein Drucksensor an der Innenwand zwischen dem Speiseeinlass (104) und dem Abgabeauslass (106) angeordnet und zum Erfassen eines Drucks im Zuführkanal ausgestaltet ist und die Steuereinrichtung mit dem Drucksensor elektrisch verbunden ist;
wobei, wenn der Drucksensor erfasst, dass der Druck im Zuführkanal niedriger als ein voreingestellter Druck ist, das Luftdrucksteuerventil geschlossen wird; und anderenfalls das Luftdrucksteuerventil geöffnet ist.

6. Automatisches Reinigungssystem auf Grundlage einer Reinigungskugel nach Anspruch 1, **dadurch gekennzeichnet, dass** jeder Anschlagmechanismus (500) einen Anschlagzylinder (510) und eine Anschlagschubstange (520) umfasst, wobei das Zentralrohr (410) jedes Umgehungsrohrgruppe mit einem Anbringungsloch (413) versehen ist, das mit der Reinigungskammer (412) verbunden ist, der Anschlagzylinder (510) jedes Anschlagmechanismus (500) in dem Anbringungsloch (413) des Zentralrohrs (410) der entsprechenden Umgehungsrohrgruppe angebracht ist und die Anschlagschubstange (520) mit einer Leistungsausgabewelle des Anschlagzylinders (510) des entsprechenden Anschlagmechanismus (500) verbunden ist.

7. Automatisches Reinigungssystem auf Grundlage einer Reinigungskugel nach Anspruch 1, **dadurch gekennzeichnet, dass** ein Kugelkäfig (4122) in der Reinigungskammer (412) angeordnet ist, wobei eine Öffnung des Kugelkäfigs (4122) mit dem entsprechenden Verbindungsrohr (200) in Kommunikationsverbindung steht und eine Innenwand des Kugelkäfigs (4122) durch Presspassung mit der Reinigungskugel (300) verbunden wird, wenn die Reinigungskugel (300) in den Kugelkäfig (4122) gleitet.

8. Automatisches Reinigungssystem auf Grundlage einer Reinigungskugel nach Anspruch 7, **dadurch gekennzeichnet, dass** eine Gleitstrecke der Reinigungskugel (300) im Kugelkäfig (4122) größer als eine maximale Länge der Reinigungskugel (300) ist.

9. Automatisches Reinigungssystem auf Grundlage einer Reinigungskugel nach Anspruch 1, **dadurch gekennzeichnet, dass** die Ein-aus-Steuerventile der Reinigungsflüssigkeitsspeiserohre (420), die Ein-aus-Steuerventile der Druckluftquellenrohre (430), die Ein-aus-Steuerventile der Aufschlämmungsabgaberohre (440) und die Ein-aus-Steuerventile der Schmutzwasserabgaberohre (450) jeweils Luftventile sind.

10. Automatisches Reinigungssystem auf Grundlage einer Reinigungskugel nach Anspruch 1, **dadurch gekennzeichnet, dass** das automatische Reinigungssystem ferner zwei Verriegelungsmechanismen umfasst, wobei jeder Verriegelungsmechanismus einen Verriegelungszylinder und eine Blockierungsstange umfasst, der Verriegelungszylinder jedes Verriegelungsmechanismus an einer Umfangswand des entsprechenden Verbindungsrohrs angebracht ist, eine Antriebswelle des Verriegelungszylinders jedes Verriegelungsmechanismus mit der entsprechenden Blockierungsstange verbunden ist, ein Steuerungsende des Verriegelungszylinders jedes Verriegelungsmechanismus mit dem entsprechenden zweite Positionssensor in Kommunikationsverbindung steht, ein Begrenzungsloch in der Umfangswand jedes Verbindungsrohrs gebildet ist und der Verriegelungszylinder jedes Verriegelungsmechanismus dazu ausgestaltet ist, die entsprechende Blockierungsstange so anzutreiben, dass sie in dem entsprechenden Begrenzungsloch in das entsprechenden Verbindungsrohr und in Anlage an einen vertieften Abschnitt der Reinigungskugel gleitet, wenn der entsprechende zweite Positionssensor ein Erfassungssignal aussendet.

11. Automatisches Reinigungssystem auf Grundlage einer Reinigungskugel nach Anspruch 1, **dadurch gekennzeichnet, dass** die Steuereinrichtung eine mikroprogrammierte Steuereinheit oder ein Industriecomputer ist.

12. Automatisches Reinigungssystem auf Grundlage einer Reinigungskugel nach einem der Ansprüche 1 bis 11, **dadurch gekennzeichnet, dass** die Reinigungskugel (300) einen ersten Kugelkörper und einen zweiten Kugelkörper umfasst, die verbunden sind;
eine Ringnut an einer Verbindungsstelle zwischen dem ersten Kugelkörper und dem zweiten Kugelkörper gebildet ist;
in ein von dem zweiten Kugelkörper entferntes Ende des ersten Kugelkörpers ein erster Magnetstreifen eingebettet ist;
in ein von dem ersten Kugelkörper entferntes Ende des zweiten Kugelkörpers ein zweiter Magnetstreifen eingebettet ist; und
ein eingeschlossener Winkel zwischen einer Erstreckungsrichtung des ersten Magnetstreifens und einer Erstreckungsrichtung des zweiten Magnetstreifens gebildet ist.

13. Automatisches Reinigungssystem auf Grundlage einer Reinigungskugel nach Anspruch 12, **dadurch gekennzeichnet, dass** der eingeschlossene Winkel gleich 90° ist.

## Revendications

1. Un système de nettoyage automatique (10) basé sur une bille de nettoyage (300), comprenant un tuyau de distribution (100), des tuyaux de raccordement (200) et une bille de nettoyage (300), le tuyau de distribution (100) étant formé par un canal de distribution (102), une entrée d'alimentation (104), une sortie d'évacuation (106) et deux orifices de raccordement (108), l'entrée d'alimentation (104), la sortie d'évacuation (106) et les deux orifices de raccordement (108) étant connectés au canal de distribution (102), et l'entrée d'alimentation (104) étant configurée pour être connectée à une extrémité d'évacuation d'une pompe d'alimentation ; le nombre de tuyaux de raccordement (108) étant de deux, et les deux tuyaux de raccordement étant respectivement un premier tuyau de raccordement et un second tuyau de raccordement ; le conduit de raccordement (108) relié au premier tuyau de raccordement étant placé près de l'entrée d'alimentation (104), et le conduit de raccordement (108) relié au second tuyau de raccordement étant placé près de la sortie d'évacuation (106), **caractérisés en ce qu'**un premier capteur en place est disposé sur une paroi extérieure du canal de distribution entre l'entrée d'alimentation (104) et la sortie d'évacuation (106), et les tuyaux de raccordement (108) sont équipés de seconds capteurs en place (203) ;
dans lequel le système de nettoyage automatique (10) comprend en outre deux groupes de tuyaux de dérivation (400), les deux groupes de tuyaux de dérivation sont respectivement un premier groupe de tuyaux de dérivation et un second groupe de tuyaux de dérivation ; le premier groupe de tuyaux de dérivation est connecté au premier tuyau de raccordement, et le second groupe de dérivation est connecté au second tuyau de raccordement ; chaque groupe de tuyaux de dérivation (400) comprend un tuyau central (410), un tuyau d'alimentation de liquide de nettoyage (420), un tuyau d'air comprimé (430), un tuyau d'évacuation de boue (440) et un tuyau d'évacuation des eaux usées (450) ; la conduite centrale (410) est reliée à la conduite d'alimentation par l'un des tuyaux de raccordement (108) correspondant ; le tuyau central (410) est formé par une chambre de nettoyage et une entrée air-liquide reliée à la chambre de nettoyage, la chambre de nettoyage est reliée au tuyau d'alimentation du liquide de nettoyage (420) et au tuyau d'air comprimé (430) par l'entrée air-liquide, la chambre de nettoyage est également reliée à la conduite d'évacuation des eaux usées et au tuyau d'évacuation de la boue (440). la conduite d'alimentation de liquide de nettoyage (420) et la conduite d'air comprimé (430) sont toutes deux situées au-dessus de la conduite centrale (410), et la conduite d'évacuation de boue (440) ainsi que la conduite d'évacuation des eaux usées (450) sont toutes deux situées sous la conduite centrale (410) ;
un troisième capteur en place (403) est disposé sur une paroi extérieure, près du tuyau de raccordement correspondant, de la chambre de nettoyage du tuyau central (410) de chaque groupe de tuyaux de dérivation, un quatrième capteur en place (405) est disposé sur la paroi extérieure, à l'écart du tuyau de raccordement correspondant, de la chambre de nettoyage, et une partie de la chambre de nettoyage reliée à l'entrée air-liquide se trouve entre le troisième capteur en place (403) et le quatrième capteur en place (405) ;
le système de nettoyage automatique (10) comprend en outre deux mécanismes d'arrêt (500) montés respectivement sur les tuyaux centraux correspondants (410), et chaque mécanisme d'arrêt (500) sert à pousser la bille de nettoyage (300) de la chambre de nettoyage du tuyau central correspondant vers le tuyau de raccordement correspondant ;
le système de nettoyage automatique comprend également un contrôleur connecté électriquement aux premiers capteurs en place, aux seconds capteurs en place (203), au troisième capteur en place (404), au quatrième capteur en place (405), à une extrémité de commande de la pompe de distribution, aux vannes de commande marche-arrêt des tuyaux d'alimentation de liquide de nettoyage (420), aux vannes de commande marche-arrêt des tuyaux à source d'air comprimé (430), vannes de commande marche-arrêt des tuyaux de décharge de boue (440) et vannes de commande marche-arrêt des tuyaux d'évacuation des eaux usées (450).

2. Le système de nettoyage automatique basé sur une bille de nettoyage selon la revendication 1, **caractérisé en ce que** chaque groupe de tuyaux de dérivation comprend en outre un T supérieur, la chambre de nettoyage est reliée à une première extrémité du T supérieur par l'entrée air-liquide, une seconde extrémité du T supérieur est reliée à la conduite d'alimentation de liquide de nettoyage (420), et une troisième extrémité du T supérieur est reliée à la conduite d'air comprimé (430).

3. Le système de nettoyage automatique basé sur une bille de nettoyage selon la revendication 1, **caractérisé en ce que** chaque groupe de tuyaux de dérivation comprend en outre un T inférieur, le tuyau central est ensuite formé par une sortie air-liquide, la chambre de nettoyage est reliée à une première extrémité du T inférieur par la sortie air-liquide, une seconde extrémité du T inférieur est reliée au tuyau d'évacuation de la boue (440), et une troisième extrémité du T inférieur est reliée à la conduite d'évacuation.

4. Le système de nettoyage automatique basé sur une bille de nettoyage selon la revendication 1, **caractérisé en ce qu'**une vanne de contrôle de pression d'air est installée à la sortie d'évacuation (106), et que le contrôleur est connecté électriquement à une extrémité de commande de la vanne de contrôle de pression d'air.

5. Le système de nettoyage automatique basé sur une bille de nettoyage selon la revendication 4, **caractérisé en ce qu'**un capteur de pression est disposé sur la paroi intérieure entre l'entrée d'alimentation (104) et la sortie d'évacuation (106) et configuré pour détecter une pression dans le canal de distribution, et le contrôleur est connecté électriquement au capteur de pression ;
lorsque le capteur de pression détecte que la pression dans le canal de distribution est inférieure à une pression prédéfinie, la vanne de contrôle de pression d'air est fermée ; sinon, la vanne de contrôle de pression d'air est ouverte.

6. Le système de nettoyage automatique basé sur une bille de nettoyage selon la revendication 1, **caractérisé en ce que** chaque mécanisme d'arrêt (500) comprend un cylindre d'arrêt (510) et une tige d'arrêt (520), le tuyau central (410) de chaque groupe de tuyau de dérivation est muni d'un trou de montage (413) relié à la chambre de nettoyage (412), le cylindre d'arrêt (510) de chaque mécanisme d'arrêt (500) est monté dans le trou de fixation (413) du tuyau central ( 410) du groupe de tuyaux de dérivation correspondant, et la tige d'arrêt (520) est reliée à un arbre de sortie de puissance du cylindre d'arrêt (510) du mécanisme d'arrêt correspondant (500).

7. Le système de nettoyage automatique basé sur une bille de nettoyage selon la revendication 1, **caractérisé en ce qu'**une cage à bille (4122) est disposée dans la chambre de nettoyage (412), une ouverture de la cage à bille (4122) est en communication avec le tuyau de raccordement correspondant (200), et une paroi intérieure de la cage à bille (4122) est en ajustement avec serrage avec la bille de nettoyage (300) lorsque la bille de nettoyage (300) glisse dans la cage à bille (4122).

8. Le système de nettoyage automatique basé sur une bille de nettoyage selon la revendication 7, **caractérisé en ce qu'**une distance de glissement de la bille de nettoyage (300) dans la cage à bille (4122) est supérieure à la longueur maximale de la bille de nettoyage (300).

9. Le système de nettoyage automatique basé sur une bille de nettoyage selon la revendication 1, **caractérisé en ce que** les vannes de commande marche-arrêt des tuyaux d'alimentation de liquide de nettoyage (420), les vannes de commande marche-arrêt des tuyaux de source d'air comprimé (430), les vannes de commande marche-arrêt des tuyaux d'évacuation de la boue (440) et les vannes de commande marche-arrêt des tuyaux d'évacuation des eaux usées (450) sont toutes des vannes d'air.

10. Le système de nettoyage automatique basé sur une bille de nettoyage selon la revendication 1, **caractérisé en ce que** le système de nettoyage automatique comprend en outre deux mécanismes de verrouillage, chacun comprenant un cylindre de verrouillage et une tige de blocage, le cylindre de verrouillage de chaque mécanisme de verrouillage est monté sur une paroi périphérique du tuyau de raccordement correspondant, un arbre d'entraînement du cylindre de verrouillage de chaque mécanisme de verrouillage est relié à la tige de blocage correspondante, une extrémité de commande du cylindre de verrouillage de chaque mécanisme de verrouillage est en raccordement de communication avec le second capteur en place correspondant, un trou de limite est formé dans la paroi périphérique de chaque tuyau de raccordement, et le cylindre de verrouillage de chaque mécanisme de verrouillage est configuré pour entraîner la tige de blocage correspondante pour glisser le long le trou de limite correspondant dans le tuyau de raccordement correspondant pour s'appuyer sur une partie encastrée de la bille de nettoyage lorsque le second capteur en place correspondant envoie un signal de détection.

11. Le système de nettoyage automatique basé sur une bille de nettoyage selon la revendication 1, **caractérisé en ce que** le contrôleur est une unité de commande microprogrammée ou un ordinateur industriel.

12. Le système de nettoyage automatique basé sur une bille de nettoyage selon l'une des revendications 1 à 11, **caractérisé en ce que** la bille de nettoyage (300) comprend un premier corps de bille et un second corps de bille qui sont connectés ;
une rainure annulaire est formée dans une jonction entre le premier corps de bille et le second corps de bille ;
une extrémité du premier corps de bille, éloignée du second corps de bille, comprend une première bande magnétique ;
une extrémité du second corps de bille, éloignée du premier corps de bille, comprend une seconde bande magnétique ; et
un angle inclus est formé entre la direction d'extension de la première bande magnétique et la direction d'extension de la seconde bande magnétique.

13. Le système de nettoyage automatique basé sur une bille de nettoyage selon la revendication 12, **caractérisé en ce que** l'angle inclus est égal à 90°.
